# EUROPÄISCHE PATENTSCHRIFT

(11) **EP 3 161 336 B1**
(45) Veröffentlichungstag und Bekanntmachung des Hinweises auf die Patenterteilung: **16.10.2019**
(21) Anmeldenummer: 15735843.3
(22) Anmeldetag: 02.06.2015
(51) Int. Cl.: F16C 33/36

(54) **PLANETENWÄLZLAGER**
PLANETARY ROLLER BEARING
PALIER À ROULEMENT PLANÉTAIRE

(30) Priorität: 24.06.2014 DE 102014212029
(43) Veröffentlichungstag der Anmeldung: 03.05.2017
(73) Patentinhaber: Schaeffler Technologies AG & Co. KG, 91074 Herzogenaurach (DE)
(72) Erfinder: STAHL, Thomas, 97490 Poppenhausen (DE); GREDY, Horst, 91097 Oberreichenbach (DE)
(86) Internationale Anmeldenummer: PCT/DE2015/200333
(87) Internationale Veröffentlichungsnummer: WO 2015/197060

(56) Entgegenhaltungen:
- EP-A2- 0 926 369
- DE-A1- 10 042 901
- DE-A1-102005 041 891
- DE-A1-102011 088 905

## Beschreibung

Die Erfindung betrifft ein Planetenwälzlager, umfassend einen Außenring mit einem am Innenumfang durch Rillen ausgebildeten Zahnprofil, einen am Innenring mit einem am Außenumfang durch Rillen ausgebildeten Zahnprofil, sowie mehrere Planetenwälzkörper mit einem durch Rillen ausgebildeten Zahnprofil, wobei die Zahnprofile der Planetenwälzkörper in die Zahnprofile der Ringe eingreifen.

Planetenwälzlager dienen der Aufnahme von axialen und radialen Kräften, wobei vorwiegend Kräfte aus axialer Richtung aufgenommen werden. Ein Planetenwälzlager besteht aus einem Außenring, einem Innenring sowie mehreren Planetenwälzkörpern, die zwischen den Ringen angeordnet sind. Sowohl die Ringe als auch die Planetenwälzkörper sind mit jeweils einem Zahnprofil versehen, wobei jedes Zahnprofil durch axial voneinander beabstandete, umlaufende Rillen gebildet ist. Die Zahnprofile greifen ineinander, das heißt, dass die Zähne der Planetenwälzkörper in die Rillen der Ringprofile und deren Zähne wiederum in die Rillen der Planetenwälzkörper eingreifen. DE 10 2005 041 891 A1 offenbart ein Planetenwälzlager gemäß dem Oberbegriff des Anspruchs 1 und dem Oberbegriff des Anspruchs 4.

Zur Führung der Planetenwälzkörper sind diese an beiden Enden mit einem zylindrischen, unprofilierten Ansatz ausgeführt, der in eine Bohrung einer jeweiligen Käfigscheibe eingreift. Durch die Anbringung der Käfigscheiben an beiden Seiten des Lagers und die Führung jedes Planetenwälzkörpers in den Bohrungen der Käfigscheiben wird eine gleichmäßige Führung aller Planetenwälzkörper gewährleistet. Zur axialen Sicherung der Käfigscheiben sind diese durch Stege, die zwischen den Planetenwälzkörpern im Lager eingebracht sind, miteinander verbunden. Die Stege greifen dabei durch weitere Bohrungen der Käfigscheiben, wobei das überstehende Stegende nach Montage umgeformt wird. Während die Ringe und die Planetenwälzkörper aus Stahl sind, kann zur Verbesserung der Gleiteigenschaften der Käfig aus Messing oder Kunststoff ausgeführt sein. Bei kritischen Flächenpressungsverhältnissen ist aber auch der Einsatz von Stahlkäfigscheiben denkbar.

Aufgrund von Einfederungs- und Toleranzaspekten werden bei den axial hintereinander geschalteten Zähnen der jeweiligen Zahnprofile die jeweils in Lastrichtung ersten in Kontakt miteinander stehenden Zähne am stärksten belastet. Versuche haben nun gezeigt, dass es dabei zu "Spannungspitzen" an diesen Zähnen kommen kann, die zu einer Überlastung und einem möglichen Versagen der ersten Zahnreihen führen können.

Der Erfindung liegt damit das Problem zugrunde, ein Planetenwälzlager anzugeben, das demgegenüber verbessert ist.

Erfindungsgemäß wird dieses Problems durch die Planetenwälzlager gemäß den unabhängigen Ansprüchen 1 und 4 gelöst.

Erfindungsgemäß ist entweder vorgesehen, dass die Höhe wenigstens eines axial gesehen ersten Zahns der Planetenwälzkörper oder des Außen- oder Innenrings geringer als die des folgenden zweiten Zahns ist.

Eine erfindungsgemäße Variante sieht alternativ vor, dass der axiale Abstand wenigstens eines axial gesehen ersten Zahns zum folgenden zweiten Zahn geringer ist als der Abstand des zweiten Zahns zum dritten Zahn.

Erfindungsgemäß ist entweder an den Planetenwälzkörpern oder einem oder beiden Ringen ein spezifisches Zahnprofil vorgesehen, das, anders bei bisher vorgesehenen, axial und radial gesehen vollständig symmetrischen Profilen, eine Unsymmetrie bzw. Ungleichheit aufweist.

Hierzu ist gemäß der ersten Erfindungsalternative die Zahnhöhe wenigstens des axial gesehen ersten Zahnes der Planetenwälzkörper oder der Ringe etwas geringer als die Höhe zumindest des folgenden zweiten Zahns. Das heißt, dass der Zahndurchmesser minimal reduziert ist. Dies führt dazu, dass dieser äußerste erste Zahn etwas aus dem Lastbereich genommen wird, mithin also etwas weniger stark belastet wird und sich hierüber eine vorteilhafte, gleichmäßigere Verteilung der Last über die übrigen Zahnreihen ergibt. Dabei kann es gemäß dieser Alternative ausreichend sein, wenn nur der erste Zahn eine geringere Höhe als der zweite Zahn aufweist, und der zweite und die folgenden Zähne allesamt die gleiche Höhe aufweisen. Denkbar wäre es aber auch, den zweiten Zahn wiederum etwas niedriger als den dritten Zahn auszuführen, und den dritten wiederum etwas niedriger als den vierten, so dass sich ein einseitig gesehen leicht balliges Profil ergibt.

Die erfindungsgemäße Iternative zur Variation der Zahnhöhe respektive des Zahndurchmessers sieht wie beschrieben vor, den axialen Abstand wenigstens des ersten Zahns zum zweiten Zahn etwas geringer als den Abstand des zweiten zum dritten Zahn auszuführen. Auch hierüber kann erreicht werden, dass der erste Zahn etwas aus dem Lastbereich genommen wird und geringer belastet wird, so dass sich die Last über die übrigen Zähne besser verteilt. Auch hier kann natürlich der Abstand des ersten zum zweiten Zahn etwas geringer als der des zweiten zum dritten Zahn sein, wie auch der Abstand des zweiten Zahns zum dritten Zahn etwas geringer als der des dritten zum vierten Zahn etc, so dass nicht nur der erste Zahn aus dem Lastbereich genommen wird, sondern zumindest auch der zweite und gegebenenfalls der dritte Zahn.

Unabhängig davon, welche Ausgestaltung nun gewählt wird, ist die Profilierungsunsymmetrie so zu wählen, dass der oder die davon betroffenen Zähne nur etwas aus dem Lastbereich genommen werden, mithin eine verminderte Last erfahren, und nicht komplett aus der Last genommen sind, da sich ansonsten die Spannungsspitzen lediglich auf den nächsten Zahn verlagern würden.

Bevorzugt ist die erfindungsgemäß vorgesehen spezifische Profilierung an den Planetenwälzkörpern vorgesehen, was fertigungstechnisch vorteilhaft ist, da hier nur eine Komponente des Planetenwälzlagers mit einem spezifischen Profil ausgeführt werden muss, die mit allen übrigen Bauteilen, insbesondere den Ringen, in Kontakt steht, während bei einer entsprechenden Profilierungsänderung seitens der Ringe sowohl der Innen- als auch der Außenring entsprechend spezifisch profiliert werden müssten.

Wurde im Rahmen der Profilanpassung die Zahnhöhe variiert, so kann nicht nur die Höhe des axial gesehen ersten Zahns reduziert werden, sondern auch die Höhe des axial gesehen letzten Zahns, auch diese kann geringer sein als die des folgenden vorletzten Zahns. In diesem Fall ist also, gesehen in axialer Richtung, ein quasi symmetrisch verändertes Zahnprofil gegeben, das heißt, dass das Zahnprofil beidseits gleich variiert wird. Dabei ist es denkbar, die Höhe aller Zähne von beiden Seiten her zur Mitte zunehmend auszuführen, so dass sich insgesamt eine ballige Querschnittsform ergibt. Wird eine solche axial gesehen symmetrische Profilierungsanpassung vorgenommen, so ergibt sich - unabhängig davon, ob nur die erste oder letzte Zahnreihe oder die Zahnreihen insgesamt in der Höhe verändert werden - die Möglichkeit, insbesondere die Planetenwälzkörper in beliebiger Ausrichtung verbauen zu können.

Alternativ zur beidseitigen Profilanpassung ist wie beschrieben die Möglichkeit gegeben, die Profilanpassung nur einseitig an der oder den äußersten Zahnreihen vorzusehen, also ohne Beeinflussung respektive Anpassung der mittleren Zahnreihen. Hierüber kann, insbesondere wenn die Planetenwälzkörper entsprechend angepasst sind, die Schränkungsneigung eines balligen Planeten, der also beidseits im Profil angepasst wäre, minimiert werden, da sich die Entlastung nur auf eine oder wenige Zahnreihen an einer Planetenseite beschränkt.

Erfolgt die Profilanpassung durch eine axiale Abstandsvariation, so wird der Abstand mehrerer aufeinander folgender Zähne stets größer, das heißt, dass sich beispielsweise der Abstand zwischen den ersten vier Zähnen vergrößert und sodann konstant bleibt. Bei dieser Anpassungsvariante ist die Profilanpassung nur auf wenige Zahnreihen beschränkt, zwischen denen der Abstand spezifisch angepasst ist, während die übrigen Zahnreihen allesamt den gleichen, konstanten Abstand aufweisen. Alternativ ist es denkbar, dass der Abstand zwischen benachbarten Zähnen kontinuierlich bis zum letzten Zahn zunimmt. Diese Alternative sieht einen kontinuierlich zunehmenden Abstand vom ersten bis zum letzten Zahn vor. Durch entsprechende Wahl der Profilanpassung kann folglich den unterschiedlichen Anforderungen im Betrieb letztlich Rechnung getragen werden.

Auch bei dieser Erfindungsausgestaltung gilt, dass die Profilanpassung entweder an den Planetenwälzkörpern vorgenommen wird, was letztlich fertigungstechnisch einfacher ist. Alternativ dazu besteht auch hier grundsätzlich die Möglichkeit, die Ringe entsprechend im Profil anzupassen.

Die Planetenwälzkörper sind bevorzugt endseitig in Käfigscheiben aufgenommen. In den Käfigscheiben sind die Planetenwälzkörper drehbar gelagert. Hierzu weisen die Käfigscheiben z.B. entsprechende Lagerbohrungen auf, in die zylindrischen Endzapfen der Planetenwälzkörper eingreifen. Die Käfigscheiben sind beispielsweise über Verbindungsstege, die axial verlaufen und benachbart zu den Planetenwälzkörpern angeordnet sind, miteinander verbunden.

Ein Ausführungsbeispiel der Erfindung ist in der Zeichnung dargestellt und wird im Folgenden näher beschrieben. Es zeigen:
- Figur 1: eine Prinzipdarstellung eines erfindungsgemäßen Planetenwälzlagers in einer geschnittenen Teilansicht,
- Figur 2: eine Prinzipdarstellung eines erfindungsgemäß profilierten Planetenwälzkörpers einer ersten Ausführungsform,
- Figur 3: eine Prinzipdarstellung eines nicht erfindungsgemäß profilierten Planetenwälzkörpers einer zweiten Ausführungsform,
- Figur 4: eine Prinzipdarstellung eines erfindungsgemäß profilierten Planetenwälzkörpers einer dritten Ausführungsform, und
- Figur 5: eine Prinzipdarstellung eines Außen- und Innenrings mit einer erfindungsgemäßen Profilierung.

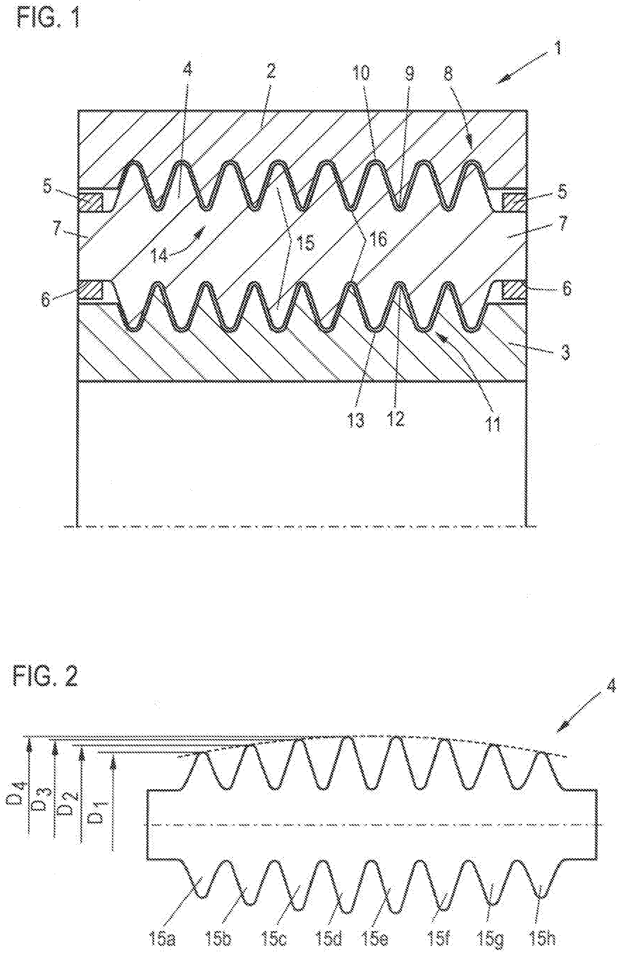

Figur 1 zeigt in Form einer Prinzipdarstellung ein erfindungsgemäßes Planetenwälzlager 1, umfassend einen Außenring 2, einen Innenring 3 sowie zwischen diesen angeordnete Planetenwälzkörper 4, von denen in dieser Ansicht lediglich einer gezeigt ist. Üblicherweise sind mehrere, beispielsweise sechs, acht oder mehr solcher Planetenwälzkörper 4 äquidistant umfangsmäßig verteilt angeordnet. Die Planetenwälzkörper 4 sind in zwei stirnseitig vorgesehenen Käfigscheiben 5 drehbar aufgenommen, die entsprechende Lagerbohrungen 6 aufweisen, in die unprofilierte, zylindrische Endzapfen 7 der Planetenwälzkörper 4 eingreifen. Die Käfigscheiben 5 sind über nicht näher gezeigte Verbindungsstege, die axial verlaufen und benachbart zu den Planetenwälzkörpern 4 angeordnet sind, miteinander verbunden.

Am Außenring 2 ist ein erstes Zahnprofil 8 realisiert, umfassend Zähne 9 und zwischen diesen ausgebildete, umlaufende Rillen 10. In entsprechender Weise ist am Innenring außenseitig ein Zahnprofil 11 ausgebildet, umfassend Zähne 12 sowie dazwischen ausgebildete umlaufende Rillen 13. Die Zahnprofile 8 und 11 sind, was die Zahnhöhe und den axialen Zahnabstand angeht, mithin also auch die entsprechende Rillenausbildung, identisch ausgeführt.

Auch jeder Planetenwälzkörper 4 ist mit einem Zahnprofil 14 versehen, umfassend Zähne 15 sowie dazwischen ausgebildete umlaufende Rillen 16. Ersichtlich greift das Zahnprofil 14 in die Zahnprofile 8 und 11 ein, wenngleich vorliegend aus Gründen der Übersichtlichkeit ein schmaler Spalt gezeichnet ist. Das heißt, dass die Flanken der Zähne 15 an den Flanken der Zähne 9 und 12 abwälzen, also ein entsprechender Wälzkontakt gegeben ist.

Zur Vergleichmäßigung der Lastverteilung über die Kontaktflächen der aneinander angreifenden Zähne sei vorliegend angenommen, dass das Zahnprofil 14 der Planetenwälzkörper 4 in spezieller Weise profiliert ist und entweder hinsichtlich der Zahnhöhe oder des axialen Zahnabstandes unsymmetrisch ist, das heißt, dass die Zähne nicht alle die gleich Höhe respektive nicht alle den gleichen Abstand zueinander aufweisen. In den folgenden Figuren 2 - 4 sind verschiedene Ausführungsbeispiele für eine solche spezifische Zahnprofilierung gegeben. Die verschiedenen Ausführungsbeispiele ermöglichen es, den in Lastrichtung gesehen jeweils ersten Zahn, und gegebenenfalls auch folgende Zähne, etwas aus der Last zu nehmen, das heißt, dass die dort anstehende Last etwas reduziert wird und sich gleichmäßiger auf die folgenden Zähne verteilt.

Figur 2 zeigt in diesem Zusammenhang eine erste Ausführungsalternative eines Planetenwälzkörpers 4. Dieser erweist im gezeigten Ausführungsbeispiel insgesamt acht Zähne 15a, 15b, 15c, ... 15h auf. Wie aus Figur 2 ersichtlich ist, ist die jeweilige Zahnhöhe respektive der Durchmesser der einzelnen Zähne nicht gleich. Im gezeigten Beispiel weisen die beiden endständigen Zähne 15a und 15h den kleinsten Durchmesser D₁ auf. Der jeweils folgende Zahn 15b bzw. 15g weist einen demgegenüber etwas größeren Durchmesser D₂ auf. Der wiederum folgende Zahn 15c und 15f weist einen erneut etwas größeren Durchmesser D₃ auf, während die beiden mittleren Zähne 15d und 15e den größten Durchmesser D₄ aufweisen. Es ergibt sich also insgesamt eine ballige Außenform. Aufgrund des reduzierten Durchmessers und insbesondere dessen kleinsten Durchmessers an den beiden äußersten Zähnen 15a und 15h sind insbesondere diese beiden Zähne geringer belastet, da die Kontaktfläche respektive der Eingriff in das Zahnprofil 8 bzw. 11 reduziert ist. Ist beispielsweise der Zahn 15a in Lastrichtung gesehen der erste Zahn, so wird er geringer belastet, als der folgende Zahn 15b, der vom Durchmesser her etwas größer ist und folglich weiter in die Zahnprofile 8, 11 eingreift, mithin also etwas stärker belastet wird, was in wiederum etwas größerem Maß für die dann folgenden Zähne 15c, 15d gilt. Eine lastbedingte "Spannungsspitze" mithin also die größte Last, liegt folglich nicht mehr am ersten Zahn 15a, sondern verteilt sich gleichmäßiger auf alle Zähne. Die Belastung am äußersten Zahn ist folglich reduziert, resultierend aus der radialen Durchmesservariation der Zähne.

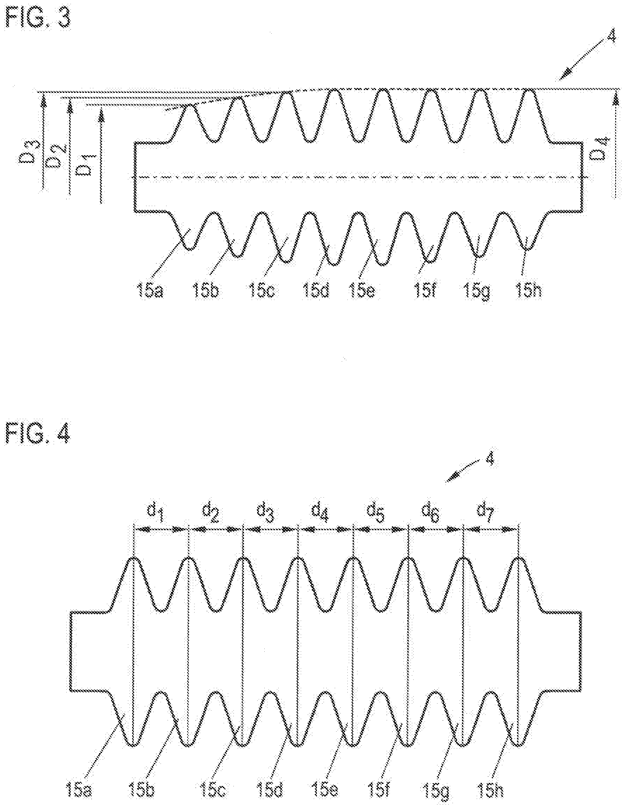

Während Figur 2 eine ballige Grundform des Planetenwälzkörpers 4 zeigt, zeigt Figur 3 nicht erfindungsgemäße Ausführungsform, bei der der Planetenwälzkörper 4 ebenfalls hinsichtlich der Zahnhöhe unsymmetrisch ist, jedoch nur einseitig angepasst ist, so dass sich folglich nur eine quasi "einseitige Balligkeit" ergibt. Wiederum sei angenommen, dass acht Zähne 15a - 15h vorgesehen sind. Ersichtlich weisen lediglich die Zähne 15a, 15b und 15c einen reduzierten, von außen nach innen hin ansteigenden Zahndurchmesser respektive Zahnhöhe auf, mit den Durchmessern D₁ am Zahn 15a, D₂ am Zahn 15b und D₃ am Zahn 15c. Die folgenden Zähne 15d - 15h weisen alle den gleichen Durchmesser D₄ auf. Selbstverständlich ergibt sich auch hier eine Vergleichmäßigung der Last, nachdem insbesondere der Zahn 15a, aber auch die Zähne 15b und 15c etwas aus der Last genommen sind. Jedoch wird hier die Schränkungsneigung des Planeten minimiert, da die anderen Zähne 15d - 15h allesamt die gleiche Höhe aufweisen.

Wenngleich in den gezeigten Ausführungsbeispielen mehrere Zähne unterschiedliche Höhen aufweisen, ist es selbstverständlich denkbar, lediglich den oder die beiden äußersten Zähne in der Höhe etwas zurückzunehmen. Bereits hierdurch kann sich eine Verbesserung der Lastverteilung ergeben.

Figur 4 zeigt eine Ausführungsform eines Planetenwälzkörpers 4, wiederum umfassend acht Zähne 15a - 15h, die allesamt den gleichen Durchmesser D aufweisen, bei denen jedoch der Abstand von Zahn zu Zahn ungleich ist, das heißt, dass eine variierende Teilung der Zahnreihen gegeben ist. Die Abstände der Zähne zueinander sind in Figur 4 mit d₁ (Abstand von Zahn 15a zu Zahn 15b), d₂ (Abstand von Zahn 15b zu Zahn 15c), ... d₇ (Abstand von Zahn 15g zu Zahn 15h) angegeben.

Es sei angenommen, dass die Lasteinleitung, bezogen auf Figur 4, von links erfolgt, also die Last zuerst am Zahn 15d ansteht. Der Abstand kann dann z. B. von links nach rechts kontinuierlich zunehmen, das heißt, es gilt: d₁<d₂<d₃<d₄<d₅<d₆<d₇. Aufgrund dieses kontinuierlich zunehmenden Zahnabstands wird ebenfalls erreicht, dass die eingetragene Last sich gleichmäßiger über die Zahnkontakte verteilt, mithin also insbesondere der erste Zahn 15a entlastet wird.

Alternativ zur progressiven Teilung der Zahnreihen mit über alle Zahnabstände ansteigendem Abstand ist es natürlich auch denkbar, lediglich den ersten, die ersten beiden oder die ersten drei Zahnabstände reduziert auszulegen, und sodann die Zahnabstände konstant zu lassen. Das heißt, dass beispielsweise folgende Abstandsverhältnisse gegeben sein können: d₁<d₂=d₃=d₄=d₅=d₆=d₇ oder d₁<d₂<d₃=d₄=d₅=d₆=d₇, oder d₁<d₂<d₃<d₄=d₅=d₆=d₇. Auch hier sind folglich, wie auch bei der Höhen- respektive Durchmesservariation, unterschiedliche Ausgestaltungsvarianten denkbar.

Es versteht sich von selbst, dass die entsprechenden Durchmesser- bzw. Abstandsvariationen wenige hundertstel oder zehntel Millimeter betragen, wobei sich die konkreten Anpassungen selbstverständlich nach der Baugröße und den zu erwartenden Lastverhältnissen richten.

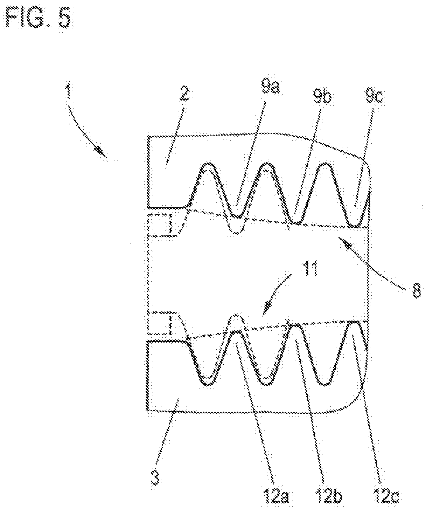

Figur 5 zeigt schließlich eine Teilansicht eines Planetenwälzlagers 1, bei dem - anders als bei den zuvor beschriebenen Ausführungsformen - die Zahnprofilierungen 8 und 11 des Außenrings 2 und des Innenrings 3 angepasst wurden. Im gezeigten Beispiel sei angenommen, dass eine Höhenvariation der Zähne erfolgte. Das heißt konkret, dass die Zähne 9a und 12a - bezogen auf den jeweiligen Rillengrund - zwar beide gleich hoch sind, jedoch etwas niedriger als die benachbarten zweiten Zähne 9b bzw. 12b, die ihrerseits wiederum etwas niedriger sind als die Zähne 9c und 12c. Das jeweilige Zahnprofil 8 bzw. 11 kann - vergleichbar mit dem Zahnprofil des Planetenwälzkörpers 4 gemäß Figur 2 - beidseits in der Höhe variieren, so dass sich eine ballige Struktur ergibt. Alternativ kann das Zahnprofil 8 bzw. 11 auch so strukturiert sein, wie es zum Planetenwälzkörper 4 gemäß Figur 3 dargestellt ist. Die gewölbte Struktur ist durch die jeweils gestrichelte Linie angedeutet.

Das Zahnprofil des jeweiligen Profilwälzkörpers 4 wäre in diesem Fall nicht geändert, das heißt, dass alle Zähne gleiche Höhe aufweisen und alle Abstände zwischen zwei Zähnen gleich wären. Denn hier sind die jeweiligen Zähne der beiden Ringe 2 etwas außer Last genommen.

Alternativ zur gezeigten Variation der Zahnhöhe am Außenring 2 und am Innenring 3 besteht natürlich die Möglichkeit, vergleichbar mit dem Planetenwälzkörper 4 aus Figur 4, den jeweiligen Zahnabstand zu variieren, das heißt, den Abstand des Zahns 9a zum Zahn 9b respektive des Zahns 12a zum Zahn 12b etwas kleiner auszuführen ist als der Abstand des Zahns 9b zum Zahn 9c respektive des Zahnes 12b zum Zahn 12c etc. Die Profilierung kann ähnlich angepasst werden, wie zum Planetenwälzkörper 4 gemäß Figur 4 beschrieben.

### Bezugszahlenliste

- 1: Planetenwälzlager
- 2: Außenring
- 3: Innenring
- 4: Planetenwälzkörper
- 5: Käfigscheibe
- 6: Lagerbohrungen
- 7: Endzapfen
- 8: Zahnprofil
- 9: Zahn
- 10: Rille
- 11: Zahnprofil
- 12: Zahn
- 13: Rille
- 14: Zahnprofil
- 15: Zahn
- 16: Rille

- D: Durchmesser
- d: Abstand

## Patentansprüche

1. Planetenwälzlager, umfassend einen Außenring (2) mit einem am Innenumfang durch Rillen (10) ausgebildeten Zahnprofil (8), einem Innenring (3) mit einem am Außenumfang durch Rillen (13) ausgebildeten Zahnprofil (11), sowie mehrere Planetenwälzkörper (4) mit einem durch Rillen (16) ausgebildeten Zahnprofil (14), wobei die Zahnprofile (14) der Planetenwälzkörper (4) in die Zahnprofile (8, 11) der Ringe (2, 3) eingreifen, **dadurch gekennzeichnet, dass** die Höhe wenigstens eines axial gesehen ersten Zahns (15a, 9a, 12a) der Planetenwälzkörper (4) oder des Außen- oder Innenrings (2, 3) geringer als die des folgenden zweiten Zahns (15b, 9b, 12b) ist, und dass die Höhe des axial gesehen letzten Zahns (15h) geringer als die des folgenden vorletzten Zahns (15g) ist

2. Planetenwälzlager nach Anspruch 1, **dadurch gekennzeichnet, dass** die Höhe von mehr als zwei axial hintereinander angeordneten Zähnen (15a - 15h, 9a - 9h, 12a - 12h) von beiden Seiten her zur Mitte hin zunimmt.

3. Planetenwälzlager nach Anspruch 2, dessen mittlere Zähne (15d, 15e) gleich große Durchmesser aufweisen.

4. Planetenwälzlager, umfassend einen Außenring (2) mit einem am Innenumfang durch Rillen (10) ausgebildeten Zahnprofil (8), einem Innenring (3) mit einem am Außenumfang durch Rillen (13) ausgebildeten Zahnprofil (11), sowie mehrere Planetenwälzkörper (4) mit einem durch Rillen (16) ausgebildeten Zahnprofil (14), wobei die Zahnprofile (14) der Planetenwälzkörper (4) in die Zahnprofile (8, 11) der Ringe (2, 3) eingreifen, wobei der axiale Abstand (d1) wenigstens eines axial gesehen ersten Zahns (15a, 9a, 12a) zum folgenden zweiten Zahn (15b, 9b, 12b) geringer ist als der Abstand des zweiten Zahns (15b, 9b, 12b) zum dritten Zahn (15c, 9c, 12c), **dadurch gekennzeichnet, dass** der Abstand (d1 - d7) mehrerer aufeinander folgender Zähne (9a - 9h) stets größer wird.

5. Planetenwälzlager nach Anspruch 4, **dadurch gekennzeichnet, dass** der Abstand (d1 - d7) zwischen benachbarten Zähnen (9a - 9h) kontinuierlich bis zum letzten Zahn zunimmt.

6. Planetenwälzlager nach Anspruch 4, **dadurch gekennzeichnet, dass** der Abstand zwischen benachbarten Zähnen (9a - 9h) nach mehreren Zunahmen konstant bleibt.

7. Planetenwälzlager nach einem der vorangehenden Ansprüche, **dadurch gekennzeichnet, dass** die Planetenwälzkörper (4) endseitig in Käfigscheiben (5) aufgenommen sind.

## Claims

1. Planetary anti-friction bearing, comprising an outer ring (2) with a tooth profile (8) which is configured on the inner circumference by way of grooves (10), an inner ring (3) with a tooth profile (11) which is configured on the outer circumference by way of grooves (13), and a plurality of planetary rolling bodies (4) with a tooth profile (14) which is configured by way of grooves (16), the tooth profiles (14) of the planetary rolling bodies (4) engaging into the tooth profiles (8, 11) of the rings (2, 3), **characterized in that** the height of at least one first (as viewed axially) tooth (15a, 9a, 12a) of the planetary rolling bodies (4) or the outer or inner ring (2, 3) is smaller than that of the following second tooth (15b, 9b, 12b), and **in that** the height of the last (as viewed axially) tooth (15h) is smaller than that of the following penultimate tooth (15g).

2. Planetary anti-friction bearing according to Claim 1, **characterized in that** the height of more than two teeth (15a-15h, 9a-9h, 12a-12h) which are arranged axially behind one another increases from both sides towards the middle.

3. Planetary anti-friction bearing according to Claim 2, the middle teeth (15d, 15e) of which have diameters of identical size.

4. Planetary anti-friction bearing, comprising an outer ring (2) with a tooth profile (8) which is configured on the inner circumference by way of grooves (10), an inner ring (3) with a tooth profile (11) which is configured on the outer circumference by way of grooves (13), and a plurality of planetary rolling bodies (4) with a tooth profile (14) which is configured by way of grooves (16), the tooth profiles (14) of the planetary rolling bodies (4) engaging into the tooth profiles (8, 11) of the rings (2, 3), the axial spacing (d1) of at least one first (as viewed axially) tooth (15a, 9a, 12a) from the following second tooth (15b, 9b, 12b) being smaller than the spacing of the second tooth (15b, 9b, 12b) from the third tooth (15c, 9c, 12c), **characterized in that** the spacing (d1-d7) of a plurality of teeth (9a-9h) which follow one another becomes constantly greater.

5. Planetary anti-friction bearing according to Claim 4, **characterized in that** the spacing (d1-d7) between adjacent teeth (9a-9h) increases continuously as far as the last tooth.

6. Planetary anti-friction bearing according to Claim 4, **characterized in that** the spacing between adjacent teeth (9a-9h) remains constant after a plurality of increases.

7. Planetary anti-friction bearing according to one of the preceding claims, **characterized in that** the planetary rolling bodies (4) are received on the end side in cage plates (5).

## Revendications

1. Palier à roulement planétaire, comprenant une bague extérieure (2) dotée d'un profil denté (8) formé par des rainures (10) sur le pourtour intérieur, une bague intérieure (3) dotée d'un profil denté (11) formé par des rainures (13) sur le pourtour extérieur, ainsi que plusieurs éléments de roulement planétaires (4) dotés d'un profil denté (14) formé par des rainures (16), les profils dentés (14) des éléments de roulement planétaires (4) s'engrenant dans les profils dentés (8, 11) des bagues (2, 3), **caractérisé en ce que** la hauteur d'au moins une première dent (15a, 9a, 12a), vue dans la direction axiale, des éléments de roulement planétaires (4) ou de la bague extérieure ou intérieure (2, 3) est inférieure à celle de la deuxième dent (15b, 9b, 12b) qui suit, et **en ce que** la hauteur de la dernière dent (15h), vue dans la direction axiale, est inférieure à celle de l'avant-dernière dent (15g) qui suit.

2. Palier à roulement planétaire selon la revendication 1, **caractérisé en ce que** la hauteur de plus de deux dents (15a - 15h, 9a - 9h, 12a - 12h) disposées les unes derrière les autres dans le sens axial augmente à partir des deux côtés vers le centre.

3. Palier à roulement planétaire selon la revendication 2, dont les dents centrales (15d, 15e) possèdent des diamètres de même taille.

4. Palier à roulement planétaire, comprenant une bague extérieure (2) dotée d'un profil denté (8) formé par des rainures (10) sur le pourtour intérieur, une bague intérieure (3) dotée d'un profil denté (11) formé par des rainures (13) sur le pourtour extérieur, ainsi que plusieurs éléments de roulement planétaires (4) dotés d'un profil denté (14) formé par des rainures (16), les profils dentés (14) des éléments de roulement planétaires (4) s'engrenant dans les profils dentés (8, 11) des bagues (2, 3), l'écart axial (d1) entre au moins une première dent (15a, 9a, 12a), vue dans la direction axiale, et la deuxième dent (15b, 9b, 12b) qui suit étant inférieur à l'écart entre la deuxième dent (15b, 9b, 12b) et la troisième dent (15c, 9c, 12c),
**caractérisé en ce que** l'écart (d1 - d7) entre plusieurs dents (9a - 9h) successives devient constamment plus grand.

5. Palier à roulement planétaire selon la revendication 4, **caractérisé en ce que** l'écart (d1 - d7) entre des dents (9a - 9h) voisines augmente continuellement jusqu'à la dernière dent.

6. Palier à roulement planétaire selon la revendication 4, **caractérisé en ce que** l'écart entre des dents (9a - 9h) voisines reste constant après plusieurs augmentations.

7. Palier à roulement planétaire selon l'une des revendications précédentes, **caractérisé en ce que** les éléments de roulement planétaires (4) sont accueillis du côté de l'extrémité dans des disques de cage (5).
